# FASCICULE DE BREVET EUROPEEN

(11) **EP 4 167 425 B1**
(45) Date de publication et mention de la délivrance du brevet: **27.11.2024**
(21) Numéro de dépôt: 22200324.6
(22) Date de dépôt: 07.10.2022
(51) Int. Cl.: H02J 7/00

(54) **DISPOSITIF D'ALIMENTATION ET PROCÉDÉ DE GESTION D'UN TEL DISPOSITIF**
STROMVERSORGUNGSVORRICHTUNG UND VERFAHREN ZUR VERWALTUNG EINER STROMVERSORGUNGSVORRICHTUNG
POWER SUPPLY DEVICE AND METHOD FOR MANAGING SUCH A DEVICE

(30) Priorité: 14.10.2021 FR 2110929
(43) Date de publication de la demande: 19.04.2023
(73) Titulaire: Sagemcom Energy & Telecom SAS, 92270 Bois-Colombes (FR)
(72) Inventeur: FERRIERES, Xavier, 92270 Bois-Colombes (FR); SCHERPEREEL, Audrey, 92270 Bois-Colombes (FR)
(74) Mandataire: Cabinet Boettcher

(56) Documents cités:
- US-A1- 2009 039 830
- US-A1- 2010 237 829
- US-A1- 2010 237 831
- US-A1- 2014 266 063

## Description

L'invention concerne un dispositif d'alimentation. L'invention concerne également un procédé de gestion d'un tel dispositif d'alimentation.

L'invention concerne également un programme d'ordinateur associé à un tel dispositif d'alimentation ainsi qu'un support de stockage d'un tel programme d'ordinateur.

### ARRIERE PLAN DE L'INVENTION

Depuis quelques années, dans le but de réduire les émissions de gaz à effet de serre, de plus en plus de personnes se déplacent à vélo plutôt qu'en véhicule à moteur à combustion (voiture, scooter, moto ...) .

Afin de pouvoir parcourir plus facilement de grandes distances, des vélos électriques plus légers et plus performants se développent tous les jours.

Bien entendu, il convient de recharger régulièrement le dispositif d'alimentation d'un vélo électrique, ledit dispositif d'alimentation comprenant des cellules (ou des batteries) se déchargeant progressivement.

Il peut arriver que le propriétaire du vélo électrique ne l'utilise que sur une partie de l'année quand la météo est plus clémente. Si ce propriétaire stocke son vélo électrique tel quel durant l'hiver, le stockage prolongé du vélo électrique peut entraîner une réduction de la durée de vie des cellules. Des solution d'équilibrage passif sont connues de l'état de la technique: US 2009/039830 et US 2010/237829.

### OBJET DE L'INVENTION

Un but de l'invention est de proposer un dispositif d'alimentation permettant de préserver davantage la durée de vie des cellules dudit dispositif.

### RESUME DE L'INVENTION

En vue de la réalisation de ce but, on propose un dispositif d'alimentation comprenant :
- un groupe d'au moins une cellule d'alimentation,
- des moyens de gestion du groupe de cellules comprenant une unité d'équilibrage passif desdites cellules.

Selon l'invention, lors d'une demande de passage en mode stockage longue durée du dispositif, les moyens de gestion sont configurés pour, via l'unité d'équilibrage passif, décharger le groupe de cellules jusqu'à ce que le groupe de cellules atteigne un état de charge cible ou une plage d'état de charge cible.

L'invention permet en conséquence d'amener le groupe de cellules à un état de charge adapté lors d'une demande de stockage longue durée. En effet, on ne stocke alors pas le groupe de cellules pleinement chargé mais à un état de charge cible prédéfini (ou à une plage d'état de charge cible). Ceci permet de mieux protéger les cellules et d'en préserver la durée de vie.

L'invention s'avère en outre simple de structure et de mise en oeuvre.

De façon avantageuse, l'invention a recours à des éléments déjà existants dans le commerce comme notamment l'unité d'équilibrage passif. En outre, elle peut être facilement implantée sur des dispositifs d'alimentation de l'art antérieur.

Optionnellement, les moyens de gestion comportent un BMS. Optionnellement, le dispositif d'alimentation comprend une interface homme/machine ou est connecté à une interface homme/machine.

Optionnellement, la demande de passage en mode stockage longue durée est transmise au dispositif via l'interface homme/machine.

Optionnellement, le dispositif d'alimentation est un dispositif d'alimentation d'un véhicule électrique. Optionnellement, le dispositif d'alimentation est un dispositif d'alimentation d'un vélo électrique. L'invention concerne également un procédé de gestion d'un dispositif d'alimentation qui vient d'être décrit, comprenant l'étape de, lors d'une demande de passage en mode stockage longue durée du dispositif et si un état de charge du groupe de cellules est supérieur à l'état de charge cible ou la plage d'état de charge cible, décharger le groupe de cellules jusqu'à ce que le groupe de cellules atteigne l'état de charge cible ou la plage d'état de charge cible.

Optionnellement, le procédé de gestion comprend l'étape, dans le mode de stockage longue durée, de charger le groupe de cellules si un état de charge dudit groupe de cellules descend sous un seuil critique prédéterminé.

L'invention concerne également un programme d'ordinateur mettant en oeuvre le procédé qui vient d'être décrit. L'invention concerne également un support de stockage du programme d'ordinateur qui vient d'être décrit.

D'autres caractéristiques et avantages de l'invention ressortiront à la lecture de la description qui suit de modes de réalisation particuliers non limitatifs de l'invention.

### BREVE DESCRIPTION DES DESSINS

L'invention sera mieux comprise à la lumière de la description qui suit en référence aux figures annexées parmi lesquelles :
[Fig. 1] la figure 1 illustre schématiquement un dispositif d'alimentation selon un mode de réalisation particulier de l'invention,
[Fig. 2] la figure 2 est un organigramme illustrant un premier exemple de mise en oeuvre du dispositif représenté à la figure 1,
[Fig. 3] la figure 3 est un organigramme illustrant un deuxième exemple de mise en oeuvre du dispositif représenté à la figure 1.

### DESCRIPTION DETAILLEE DE L'INVENTION

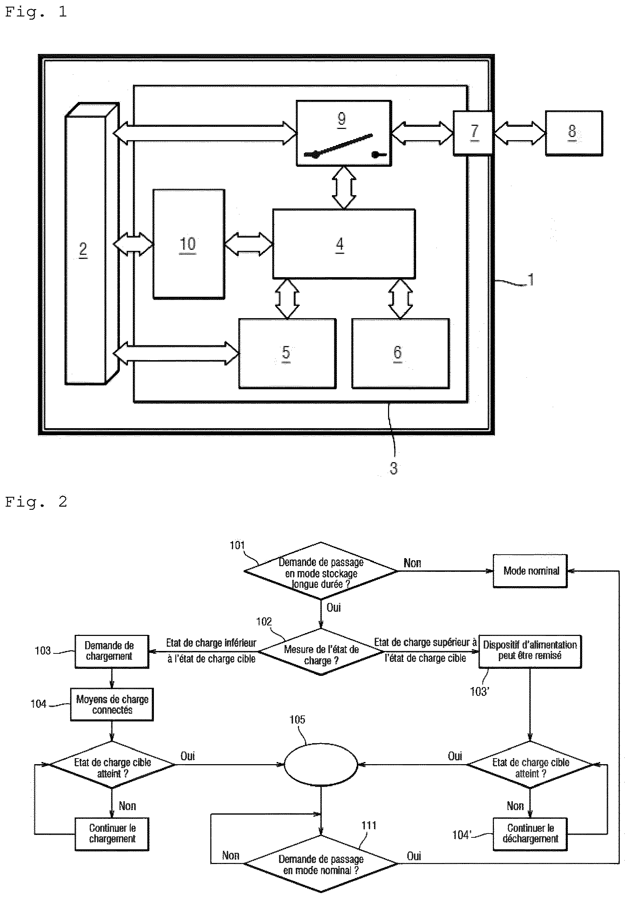

La figure 1 illustre un dispositif d'alimentation 1 selon un mode de réalisation particulier de l'invention.

Un tel dispositif d'alimentation 1 est destiné à alimenter un objet tel que par exemple un véhicule. Optionnellement un tel dispositif d'alimentation 1 est destiné à alimenter un vélo électrique.

De façon connue en soi, le dispositif d'alimentation 1 comprend un groupe d'au moins une cellule d'alimentation et ici de plusieurs cellules d'alimentation (encore appelées batteries d'alimentation) ainsi que des moyens de gestion desdites cellules. L'ensemble formé par le groupe de cellules 2 et les moyens de gestion 3 est parfois également appelé « pack de batteries ». Les cellules sont par exemple des batteries de type Lithium, et par exemple des batteries de type Lithium-Ion ou Lithium-polymère. Les moyens de gestion 3 comprennent par exemple une carte électronique comprenant un organe de gestion 4, de type circuit intégré, tel que par exemple un microcontrôleur ou bien un microprocesseur. Dans le cas présent, les moyens de gestion 3 comprennent une carte électronique incluant un microcontrôleur. De préférence, la carte électronique comprend ou est un « Système de Contrôle des Batteries » (plus connu sous l'acronyme anglais BMS pour « Battery Management System »).

Par ailleurs, les moyens de gestion 3 comportent des moyens de mesure 5 de l'état de charge du groupe de cellules 2 (l'état de charge est parfois plus connu sous le terme anglais de « State of Charge » ou son acronyme SoC). Les moyens de mesure 5 sont incorporés à l'organe de gestion 4 ou bien sont reliés à l'organe de gestion 4 afin que l'organe de gestion 4 puisse les commander et estimer ainsi l'état de charge à un instant t du groupe de cellules. Les moyens de mesure 5 comprennent par exemple un capteur et/ou un organe de calcul et déterminent l'état de charge du groupe de cellules 2 par exemple :
- par mesure et/ou estimation d'une tension aux bornes du groupe de cellules 2,
- et/ou en se basant sur des données transmises par un compteur de Coulombs associé au groupe de cellules 2 et faisant partie du dispositif d'alimentation 1.

On note ici que les moyens de mesure 5 communiquent l'état de charge général du groupe de cellules 2 et non l'état de charge de chacune des cellules au sein dudit groupe.

De préférence, le dispositif d'alimentation 1 comporte en outre au moins une interface homme/machine 6 en liaison avec l'organe de gestion 4 afin qu'un utilisateur puisse interagir avec le dispositif d'alimentation 1 comme par exemple lui donner un ordre ou bien récupérer des informations sur le dispositif d'alimentation 1. L'interface homme-machine 6 comprend par exemple au moins un bouton et/ou au moins un voyant et/ou au moins un écran (tactile ou non) ....

Par ailleurs, afin de pouvoir charger le dispositif d'alimentation 1 et notamment le groupe de cellules 2, le dispositif d'alimentation 1 comporte une interface de connexion 7 à des moyens de charge 8 externes au dispositif d'alimentation. Par exemple les moyens de charge 8 comprennent ou sont un chargeur portatif ou bien un chargeur non portatif ou encore un adaptateur raccordé à une prise secteur ... Les moyens de charge 8 sont bien entendu adaptés à l'interface de connexion 7. De façon particulière, c'est ici par cette même interface de connexion 7 que le dispositif d'alimentation 1 est raccordé au vélo électrique. Alternativement le dispositif d'alimentation 1 pourra comporter une première interface de connexion pour le raccordement à des moyens de charge externes au dispositif d'alimentation et une deuxième interface de connexion pour le raccordement au vélo électrique.

Les moyens de gestion 3 comportent ainsi un circuit de transmission d'une puissance électrique entre l'interface de connexion 7 et le groupe de cellules 2.

De préférence, les moyens de gestion 3 comportent un organe de coupure 9 agencé sur ledit circuit, l'organe de coupure 9 étant relié à l'organe de gestion 4. De la sorte, l'organe de gestion 4 commande l'organe de coupure 9 pour ouvrir (respectivement fermer) le circuit de transmission et ainsi refuser la charge du groupe de cellules 2(respectivement autoriser la charge du groupe de cellules). L'organe de coupure 9 est par exemple un commutateur tel qu'un interrupteur, un contacteur ...

Les moyens de gestion 4 comportent également une unité d'équilibrage passif 10 du groupe de cellules 2. L'organe de gestion 4 est relié à l'unité d'équilibrage passif afin de le commander.

On rappelle ici que pour les appareils utilisant un pack de batteries, il est connu que ledit pack intègre une unité d'équilibrage des différentes cellules c'est-à-dire une unité qui va permettre d'uniformiser l'état de charge de toutes les cellules au sein du groupe de cellules. En effet, à long terme les différents cycles de charge et de décharge du pack de batteries peuvent introduire un déséquilibre d'état de charge entre les différentes cellules. L'unité d'équilibrage permet donc de rectifier ce déséquilibre.

Il est connu à ce jour deux types d'unité d'équilibrage l'unité d'équilibrage actif et l'unité d'équilibrage passif.

L'unité d'équilibrage passif (parfois également appelé unité de « passive balancing » en anglais) permet d'uniformiser l'état de charge des cellules en forçant un déchargement des cellules présentant le plus haut état de charge pour les amener au niveau des cellules présentant le plus faible état de charge.

A cet effet, l'unité d'équilibrage passif se base souvent sur le principe de la dissipation thermique pour décharger les cellules par effet Joule. L'unité d'équilibrage passif comprend des circuits intégrant des résistances agencées en parallèles des différentes cellules, circuits qui sont activables de manière indépendante les uns des autres. Par ailleurs, l'unité d'équilibrage passif comprend des moyens d'estimation de l'état de charge de chacune des cellules. Par exemple ces moyens d'estimation déterminent l'état de charge de chaque cellule par mesure d'une tension aux bornes de ladite cellule.

Lorsqu'une des cellules présente un état de charge trop important par rapport aux autres (ce qui est déterminé par les moyens d'estimation), l'unité d'équilibrage passif ferme le circuit parallèle correspondant : la cellule associée se décharge alors dans la résistance du circuit parallèle qui par conséquence s'échauffe.

Du fait que les différents circuits sont activables de manière indépendante, l'unité d'équilibrage passif peut ainsi décharger seulement une ou plusieurs cellules au sein du groupe de cellules. Dans le cas du présent dispositif, on comprend donc que si les moyens de mesure 5 communiquent uniquement l'état de charge général du groupe de cellules 2, l'unité d'équilibrage passif 10 permet lui d'estimer l'état de charge de chacune des cellules au sein dudit groupe de cellules 2 pour assurer un équilibrage entre les différentes cellules.

Dans le cas du présent dispositif, dans le mode nominal, l'unité d'équilibrage passif 10 fonctionne comme dans l'art antérieur qui vient d'être décrit, par décharge sélective d'une ou plusieurs cellules présentant le plus haut état de charge pour les amener au niveau des cellules présentant le plus faible état de charge. L'objectif général de l'unité d'équilibrage passif 10 est bien entendu d'aligner au maximum les états de charge de toutes les cellules entre elles (et de préférence au plus haut état de charge possible).

En outre, l'unité d'équilibrage passif 10 est également configuré pour pouvoir fonctionner dans un deuxième mode dit « mode de stockage longue durée ». Dans ce mode de stockage longue durée, si cela lui est demandé par l'organe de gestion 4, l'unité d'équilibrage passif 10 est également configurée pour, si l'état de charge du groupe de cellules 2 est supérieur à un état de charge cible, forcer la décharge d'au moins l'une des cellules dans ledit groupe de cellules 2 afin d'amener le groupe de cellules 2 au plus vite à l'état de charge cible.

De préférence, l'unité d'équilibrage passif 10 est également configurée pour de ne pas introduire de déséquilibre trop prononcé d'état de charge entre les différentes cellules lors du déchargement du groupe de cellules 2 pour l'amener à l'état de charge cible.

Ainsi, préférentiellement, si cela lui est demandé par l'organe de gestion 4, l'unité d'équilibrage passif 10 est configurée pour, si l'état de charge du groupe de cellules 2 est supérieur à un état de charge cible, forcer la décharge de toutes les cellules dans ledit groupe de cellules 2 afin d'amener le groupe de cellules 2 au plus vite à l'état de charge cible.

Différents algorithmes peuvent être implémentés dans l'organe de gestion 4 et/ou l'unité d'équilibrage passif 10 pour assurer le déchargement du groupe de cellules 2 via l'unité d'équilibrage passif 10 lorsque le dispositif d'alimentation 1 est dans le mode d'équilibrage passif. Par exemple, au moins un algorithme implémenté peut ordonner un déchargement simultané de toutes les cellules ou au moins un algorithme implémenté peut ordonner un déchargement de toutes les cellules par déchargement durant un laps de temps donné de chaque cellule alternativement afin qu'une fois le laps de temps donné écoulé, le déchargement recommence une nouvelle fois pendant le même laps de temps (ou un laps de temps différent) dans chaque cellule alternativement et ainsi de suite.

De préférence, quel que soit l'algorithme choisi, le déchargement s'arrête à intervalle régulier le temps pour les moyens de mesure 5 d'estimer l'état de charge du groupe de cellules 2 et ainsi permettre à l'organe de gestion 4 d'estimer si la décharge doit continuer ou non. En variante, le déchargement et l'estimation de l'état de charge du groupe de cellules 2 se fait simultanément et/ou en continu.

Un exemple d'algorithme non limitatif est donné ci-dessous (par déchargement simultané entre les différentes cellules et arrêt temporaire du déchargement pour l'estimation de l'état de charge) :
Début :
Tant que l'état de charge est supérieur à l'état de charge cible :

```
{
     Fermer les circuits en parallèle de toutes les
 cellules pendant un laps de temps donné
     Mesurer à nouveau l'état de charge
```

Le laps de temps donné d'arrêt de la décharge est par exemple compris entre 5 et 20 secondes et par exemple entre 10 et 15 secondes et est par exemple de 10 secondes.

L'unité d'équilibrage passif 10 a donc deux fonctions :
- en mode nominal assurer un équilibrage de l'état de charge entre les différentes cellules,
- en mode stockage longue durée amener le groupe de cellules 2 à l'état de charge cible.

On retient que l'état de charge cible correspond au niveau optimal de charge pour le stockage du groupe de cellules 2. Cet état de charge cible peut être fourni par le constructeur du groupe de cellules 2 ou par le constructeur du dispositif d'alimentation 1 ou par le constructeur de l'objet associé au dispositif d'alimentation 1. Il peut également être prédéfini en fonction de la nature des cellules du groupe de cellules 2 et de la manière dont on souhaite gérer le groupe de cellules 2 (par exemple selon l'algorithme choisi pour décharger les cellules). Il peut être modifiable ou non par l'utilisateur (via par exemple l'interface homme-machine 6). Il peut être défini par l'utilisateur (via par exemple l'interface homme-machine 6) ou être défini et fixé en usine lors de la fabrication du groupe de cellules 2 ou du dispositif d'alimentation 1 ou de l'objet. Par exemple l'état de charge cible est compris entre 25 et 60% et par exemple est compris entre 30 et 50% et est par exemple compris entre 35 et 45%. L'état de charge cible peut donc être par exemple de 30 ou 35 ou 40 ou 45%.

Par ailleurs le stockage longue durée est ici associé à au moins une première donnée. La première donnée est la valeur minimale d'une période pour laquelle, si le dispositif d'alimentation 1 n'est pas utilisé durant cette période, il s'avère préférable d'être en mode stockage longue durée et non en mode nominal.

La première donnée est ici une donnée prédéfinie (par exemple par le constructeur du groupe de cellules 2 ou par le constructeur du dispositif d'alimentation 1 ou par le constructeur de l'objet associé au dispositif d'alimentation) en fonction de la nature des cellules du groupe de cellules 2 et de la manière dont on souhaite gérer le groupe de cellules 2 (par exemple selon l'algorithme choisi pour décharger les cellules).

Cette première donnée est par exemple fournie à l'utilisateur par exemple dans le mode d'emploi de l'objet associé au dispositif d'alimentation 1.

La première donnée est par exemple de 2 semaines (i.e. si la période au cours de laquelle le dispositif d'alimentation 1 n'est pas utilisé est d'au moins 2 semaines, il serait préférable d'être en mode de stockage longue durée) et par exemple de 1 mois (i.e. si la période au cours de laquelle le dispositif d'alimentation 1 n'est pas utilisé est d'au moins 1 mois, il serait préférable d'être en mode de stockage longue durée) et par exemple de 3 mois (i.e. si la période au cours de laquelle le dispositif d'alimentation 1 n'est pas utilisé est d'au moins 3 mois, il serait préférable d'être en mode de stockage longue durée) et par exemple de 6 mois (i.e. si la période au cours de laquelle le dispositif d'alimentation 1 n'est pas utilisé est d'au moins 6 mois, il serait préférable d'être en mode de stockage longue durée). Bien entendu, l'utilisateur peut décider seul de basculer en mode de stockage longue durée même s'il ignore pendant combien de temps il va remiser le dispositif d'alimentation 1.

Comme il va être détaillé ci-dessous, le dispositif d'alimentation 1 qui vient d'être décrit est configuré pour gérer l'état de charge du groupe de cellules 2 afin de l'amener à l'état de charge cible, et ce que l'état de charge du groupe de cellules 2 se trouve à un niveau supérieur ou inférieur à l'état de charge cible.

Si l'état de charge cible est supérieur à l'état de charge du groupe de cellules 2, le dispositif d'alimentation 1 est configuré pour recharger le groupe de cellules jusqu'à l'état de charge cible par l'intermédiaire du circuit de transmission, de l'organe de coupure 9 et des moyens de charge 8.

Si l'état de charge cible est inférieur à l'état de charge du groupe de cellules 2, le dispositif d'alimentation 1 est configuré pour décharger le groupe de cellules 2 jusqu'à l'état de charge cible par l'intermédiaire de l'unité d'équilibrage passif 10.

En référence à la figure 2, un premier exemple de mise en œuvre particulière de l'invention va être à présent décrit. Selon une première étape 101, l'utilisateur souhaitant remiser son dispositif d'alimentation 1 l'indique au dispositif d'alimentation 1. A cet effet, l'utilisateur transmet une demande de passage en mode de stockage longue durée, via l'interface homme-machine 6, aux moyens de gestion 3.

A réception de cette demande, et selon une deuxième étape 102, l'organe de gestion 4 récupère des moyens de mesure 5 l'état de charge courant du groupe de cellules 2.

### Si l'état de charge courant du groupe de cellules 2 est inférieur à l'état de charge cible.

Au cours d'une troisième étape 103, l'organe de gestion indique, via l'interface homme-machine 6, à l'utilisateur qu'il doit brancher les moyens de charge 8 au dispositif d'alimentation 1. Par exemple un voyant de l'interface homme-machine 6 peut se mettre à clignoter pour signifier que le dispositif d'alimentation 1 doit être rechargé.

L'utilisateur connecte alors les moyens de charge 8 au dispositif d'alimentation 1 au cours d'une quatrième étape 104 et l'organe de gestion 4 ferme le circuit de transmission pour autoriser le chargement du groupe de cellules 2.

En interne au dispositif d'alimentation, l'organe de gestion 4 surveille le chargement du groupe de cellules 2 via les moyens de mesure 5. Lorsque l'état de charge du groupe de cellules 2 atteint l'état de charge cible, au cours d'une cinquième étape 105, l'organe de gestion ouvre le circuit de transmission pour arrêter le chargement du groupe de cellules 2.

Optionnellement, l'organe de gestion 4 indique aussi, via l'interface homme-machine 6, à l'utilisateur qu'il peut débrancher les moyens de charge 8. Par exemple le voyant de l'interface homme-machine 6 qui clignotait est éteint et un autre voyant de l'interface homme-machine 6 est allumé signifiant par là même à l'utilisateur qu'il peut débrancher les moyens de charge 8 et remiser le dispositif d'alimentation 1.

En option, l'utilisateur peut remiser le dispositif d'alimentation 1 en laissant les moyens de charge 8 raccordés au dispositif d'alimentation 1.

### Si l'état de charge courant du groupe de cellules 2 est égal à l'état de charge cible.

Optionnellement, l'organe de gestion 4 indique, via l'interface homme-machine 6, à l'utilisateur qu'il peut remiser le dispositif d'alimentation 1. Par exemple un voyant de l'interface homme-machine 6 est allumé signifiant par là même à l'utilisateur qu'il peut remiser le dispositif d'alimentation 1.

### Si l'état de charge courant du groupe de cellules 2 est supérieur à l'état de charge cible.

Au cours d'une troisième étape 103', optionnellement, l'organe de gestion 4 indique, via l'interface homme-machine 6, à l'utilisateur qu'il peut remiser le dispositif d'alimentation 1. Par exemple un voyant de l'interface homme-machine 6 est allumé signifiant par là même à l'utilisateur qu'il peut remiser le dispositif d'alimentation 1.

Au cours d'une quatrième étape 104', l'organe de gestion 4 ordonne un déchargement du groupe de cellules 2 à l'unité d'équilibrage passif 10.

En interne au dispositif d'alimentation 1, l'organe de gestion 4 surveille le déchargement du groupe de cellules 2 via les moyens de mesure 5. Lorsque l'état de charge du groupe de cellules 2 atteint l'état de charge cible, au cours d'une cinquième étape, l'organe de gestion 4 ordonne à l'unité d'équilibrage passif 10 d'arrêter le déchargement.

### Retour au mode nominal

Si l'utilisateur demande un retour au mode nominal (par exemple dans le cas où il souhaite de nouveau utiliser le dispositif d'alimentation 1 en mode nominal - c'est-à-dire en utilisant le dispositif d'alimentation 1 par opposition au mode de stockage longue durée où le dispositif d'alimentation 1 est remisé), l'utilisateur l'indique alors au dispositif d'alimentation 1 au cours d'une première phase 111. A cet effet, l'utilisateur transmet une demande de retour au mode nominal, via l'interface homme-machine 6, aux moyens de gestion 4.

Par exemple l'utilisateur transmet une demande de retour au mode nominal, via l'interface de connexion 7, en raccordant les moyens de charge 8 au dispositif d'alimentation 1. En variante, la demande peut être par exemple une simple demande de chargement complet du groupe de cellules 2.

La demande de retour au mode nominal peut donc être explicite (via l'interface homme-machine 6) ou implicite (via l'interface de connexion 7).

Au cours d'une deuxième phase, si les moyens de charge 8 ne sont pas déjà branchés au dispositif d'alimentation 1, l'organe de gestion 4 indique, via l'interface homme-machine 6, à l'utilisateur qu'il doit brancher les moyens de charge 8 au dispositif d'alimentation 1. Par exemple un voyant de l'interface homme-machine 6 peut se mettre à clignoter pour signifier que le dispositif d'alimentation 1 doit être rechargé.

L'utilisateur connecte alors les moyens de charge 8 au dispositif d'alimentation 1 (si ce n'est pas déjà fait) au cours d'une troisième phase et l'organe de gestion 4 ferme le circuit de transmission pour autoriser le chargement du groupe de cellules 2.

Le dispositif d'alimentation 1 bascule ainsi dans son mode nominal jusqu'à une nouvelle demande de passage dans le mode de stockage longue durée.

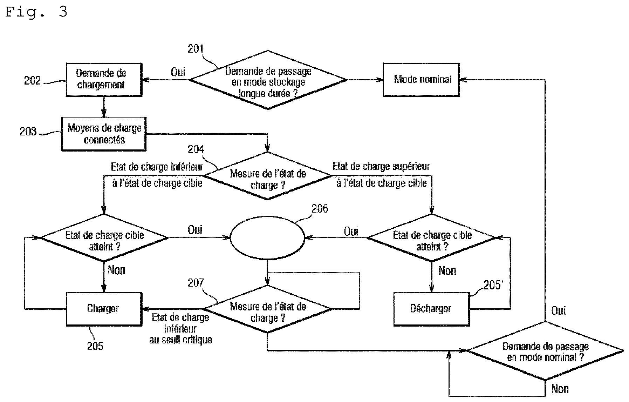

En référence à la figure 3, un deuxième exemple de mise en œuvre particulier de l'invention va être à présent décrit.

Alors que dans le premier exemple, une fois l'état de charge cible atteint, le dispositif d'alimentation 1 ne s'occupait plus de l'état de charge du groupe de cellules 2 avant un retour au mode nominal, dans le deuxième exemple, le dispositif d'alimentation 1 s'occupe de l'état de charge du groupe de cellules 2 également dans le mode de stockage longue durée.

En effet, les cellules ont naturellement tendance à s'auto-décharger même si elles ne sont pas utilisées. Le deuxième exemple permet de pallier cet inconvénient en ajoutant une fonctionnalité de recharge ponctuelle vis-à-vis du premier exemple du groupe de cellules 2 soit jusqu'à l'état de charge cible initial au moment du passage au mode de stockage longue durée soit jusqu'à une valeur palier différente de l'état de charge cible au moment du passage au mode de stockage longue durée. Cette valeur palier peut être fournie par le constructeur du groupe de cellules 2 ou par le constructeur du dispositif d'alimentation 1 ou par le constructeur de l'objet associé au dispositif d'alimentation. Elle peut également être prédéfinie en fonction de la nature des cellules du groupe de cellules 2 et de la manière dont on souhaite gérer le groupe de cellules 2 (par exemple selon l'algorithme choisi pour décharger les cellules). Elle peut être modifiable ou non par l'utilisateur (via par exemple l'interface homme-machine). Elle peut être définie par l'utilisateur (via par exemple l'interface homme-machine) ou être définie et fixée en usine lors de la fabrication du groupe de cellules 2 ou du dispositif d'alimentation 1 ou de l'objet. Par exemple la valeur palier est comprise entre 25 et 60% et par exemple est comprise entre 30 et 50% et est par exemple comprise entre 35 et 45%. La nouvelle valeur peut donc être par exemple de 30 ou 35 ou 40 ou 45%. La valeur palier est de préférence inférieure à l'état de charge cible initial au moment du passage au mode de stockage longue durée.

Dans ce deuxième exemple il convient toutefois de laisser les moyens de charge 8 branchés au dispositif d'alimentation 1 durant le mode de stockage longue durée (ou au moins durant une partie dudit mode de stockage longue durée).

Selon une première étape 201, l'utilisateur souhaitant remiser son dispositif d'alimentation 1 l'indique au dispositif d'alimentation 1. A cet effet, l'utilisateur transmet une demande de passage en mode de stockage longue durée, via l'interface homme-machine 6, aux moyens de gestion 3.

A réception de cette demande, et selon une deuxième étape 202, l'organe de gestion 4 indique, via l'interface homme-machine 6, à l'utilisateur qu'il doit brancher les moyens de charge 8 au dispositif d'alimentation 1. Par exemple un voyant de l'interface homme-machine 6 peut se mettre à clignoter pour signifier que le dispositif d'alimentation 1 doit être connecté aux moyens de charge 8.

L'utilisateur connecte alors les moyens de charge 8 au dispositif d'alimentation 1 au cours d'une troisième étape 203.

Une fois que l'organe de gestion 4 détecte que les moyens de charge 8 sont branchés, et selon une quatrième étape 204, l'organe de gestion 4 récupère des moyens de mesure 5 l'état de charge courant du groupe de cellules 2. Cette quatrième étape 204 peut s'enchainer automatiquement dès détection du branchement des moyens de charge 8 ou bien peut n'être mise en oeuvre qu'en cas d'action de l'utilisateur par exemple sur l'interface homme-machine 6 (par exemple l'utilisateur doit valider que les moyens de charge 8 sont bien branchés au dispositif d'alimentation 1 pour que cette quatrième étape 204 soit mise en oeuvre). Optionnellement, l'organe de gestion 4 indique, via l'interface homme-machine 6, à l'utilisateur qu'il peut remiser le dispositif d'alimentation 1 raccordé aux moyens de charge 8.

### Au démarrage du mode de stockage longue durée

### Si l'état de charge courant du groupe de cellules 2 est inférieur à l'état de charge cible.

Au cours d'une cinquième étape 205, l'organe de gestion 4 ferme le circuit de transmission pour autoriser le chargement du groupe de cellules 2.

En interne au dispositif d'alimentation 1, l'organe de gestion 4 surveille le chargement du groupe de cellules 2 via les moyens de mesure 5. Lorsque l'état de charge du groupe de cellules 2 atteint l'état de charge cible, au cours d'une sixième étape 206, l'organe de gestion 4 ouvre le circuit de transmission pour arrêter le chargement du groupe de cellules 2.

### Si l'état de charge courant du groupe de cellules 2 est égal à l'état de charge cible.

Aucune étape supplémentaire n'est mise en oeuvre.

### Si l'état de charge courant du groupe de cellules 2 est supérieur à l'état de charge cible.

Au cours d'une cinquième étape 205', l'organe de gestion 4 ordonne un déchargement du groupe de cellules 2 à l'unité d'équilibrage passif 10.

En interne au dispositif d'alimentation 1, l'organe de gestion 4 surveille le déchargement du groupe de cellules 2 via les moyens de mesure 5. Lorsque l'état de charge du groupe de cellules 2 atteint l'état de charge cible, au cours d'une sixième étape 206, l'organe de gestion 4 ordonne à l'unité d'équilibrage passif 10 d'arrêter le déchargement.

### Au cours du mode de stockage longue durée

Selon une septième étape 207, l'organe de gestion 4 récupère de manière périodique des moyens de mesure 5 l'état de charge courant du groupe de cellules 2.

Par exemple l'organe de gestion 4 récupère des moyens de mesure 5 l'état de charge courant du groupe de cellules 2 au moins une fois par semaine et de préférence au moins une fois par jour. De préférence, l'organe de gestion 4 récupère des moyens de mesure 5 l'état de charge courant du groupe de cellules 2 une unique fois par jour.

Si l'état de charge descend en dessous d'un seuil critique d'état de charge, l'organe de gestion 4 ferme le circuit de transmission pour autoriser le chargement du groupe de cellules 2.

Le seuil critique peut être fourni par le constructeur du groupe de cellules 2 ou par le constructeur du dispositif d'alimentation 1 ou par le constructeur de l'objet associé au dispositif d'alimentation. Il peut également être prédéfini en fonction de la nature des cellules du groupe de cellules 2 et de la manière dont on souhaite gérer le groupe de cellules 2 (par exemple selon l'algorithme choisi pour décharger les cellules) . Il peut être modifiable ou non par l'utilisateur (via par exemple l'interface homme-machine 6). Il peut être défini par l'utilisateur (via par exemple l'interface homme-machine 6) ou être défini et fixé en usine lors de la fabrication du groupe de cellules 2 ou du dispositif d'alimentation 1 ou de l'objet. Par exemple le seuil critique est compris entre 5 et 30% et par exemple est comprise entre 10 et 20%. Le seuil critique peut donc être par exemple de 10, 15 ou 20%. En variante, le seuil critique est égal à l'état de charge cible du début du mode de stockage longue durée.

En interne au dispositif d'alimentation 1, l'organe de gestion 4 surveille le chargement du groupe de cellules 2 via les moyens de mesure 5. Lorsque l'état de charge du groupe de cellules 2 atteint de nouveau l'état de charge cible du début du mode de stockage longue durée (ou le seuil palier décrit ci-dessus) l'organe de gestion 4 ouvre le circuit de transmission pour arrêter le chargement du groupe de cellules 2.

On retourne ensuite à la septième étape de surveillance 207 de l'état de charge du groupe de cellules 2.

### Retour au mode nominal

Si l'utilisateur demande un retour au mode nominal (par exemple dans le cas où il souhaite de nouveau utiliser le dispositif d'alimentation 1 en mode nominal - c'est-à-dire en utilisant le dispositif d'alimentation 1 par opposition au mode de stockage longue durée où le dispositif d'alimentation 1 est remisé), l'utilisateur l'indique alors au dispositif d'alimentation 1 au cours d'une première phase 211. A cet effet, l'utilisateur transmet une demande de retour au mode nominal, via l'interface homme-machine 6, aux moyens de gestion 3. Cette demande peut être par exemple une simple demande de chargement complet du groupe de cellules 2. En variante, l'utilisateur transmet une demande de retour au mode nominal, via l'interface de connexion 7, en débranchant les moyens de charge 8 du dispositif d'alimentation 1. La demande de retour au mode nominal peut donc être explicite (via l'interface homme-machine 6) ou implicite (via l'interface de connexion 7).

Au cours d'une deuxième phase, si les moyens de charge 8 sont toujours branchés au dispositif d'alimentation 1, l'organe de gestion 4 ferme le circuit de transmission pour autoriser le chargement du groupe de cellules 2.

Le dispositif d'alimentation 1 bascule ainsi dans son mode nominal jusqu'à une nouvelle demande de passage dans le mode de stockage longue durée.

Quel que soit l'exemple de mise en oeuvre décrit, on note que le dispositif d'alimentation 1 est configuré de sorte que si l'état de charge cible est inférieur à l'état de charge du groupe de cellules 2, l'unité d'équilibrage passif 10 est utilisée pour amener au plus vite ledit groupe de cellules 2 à l'état de charge cible. Ainsi l'unité d'équilibrage passif 10 ne travaille pas de manière traditionnelle pour atteindre un équilibre entre les cellules mais pour faire atteindre l'état de charge cible au groupe de cellules 2. En revanche, si l'état de charge cible est supérieur à l'état de charge du groupe de cellules 2, le dispositif d'alimentation 1 est configuré pour commander un chargement du groupe de cellules 2 jusqu'à l'état de charge cible.

Ainsi, le dispositif d'alimentation 1 décrit permet de gérer le niveau de charge des cellules, que l'état de charge du groupe de cellules 2 se trouve dans un niveau supérieur ou inférieur à l'état de charge cible.

Le dispositif d'alimentation 1 est donc configuré pour autoriser un chargement ou un déchargement jusqu'à l'état de charge cible.

Ceci permet de manière simple de bien protéger les cellules et ainsi d'en préserver la durée de vie.

De façon avantageuse, le dispositif d'alimentation 1 se suffit pour ordonner la charge ou la décharge du groupe de cellules 2 et ne nécessite donc pas d'élément externe (hors les moyens de charge 8 qui sont de toute façon déjà nécessaires pour charger le dispositif d'alimentation en mode nominal).

On note par ailleurs que les exemples qui ont été décrits sont mis en oeuvre par la carte électronique et notamment par l'organe de gestion 4.

Bien entendu l'invention n'est pas limitée aux modes de réalisations décrits et on peut y apporter des variantes sans sortir du cadre de l'invention tel que défini par les revendications.

Ainsi bien qu'ici le dispositif d'alimentation soit lié à un vélo électrique le dispositif pourra être lié à tout autre véhicule comme une trottinette électrique, un engin de manutention ... ou pourra être lié à tout autre objet qu'un véhicule nécessitant un dispositif d'alimentation comme par exemple un ordinateur portable ...

Bien qu'ici les cellules soient des batteries Lithium, les cellules pourront être tout autre type de batteries rechargeables.

Bien qu'ici les moyens de gestion comportent un Système de Contrôle des Batteries, les moyens de gestion pourront comprendre d'autres éléments (alternativement ou en complément). Ainsi, en variante, les moyens de gestion pourront comprendre une simple carte électronique équipée d'un organe de gestion et permettant d'assurer un équilibrage passif des cellules.

Bien qu'ici ce soit toujours l'utilisateur qui commande un passage au mode de stockage longue durée, le passage au mode de stockage longue durée pourra être demandé directement par les moyens de gestion sans intervention de l'utilisateur (et ce que le dispositif comporte ou non une interface homme-machine et/ou soit en communication ou non avec une interface homme-machine).

Par exemple, si l'utilisateur laisse brancher les moyens de charge au dispositif d'alimentation, et qu'au cours d'un delta de temps donné, l'organe de gestion n'a enregistré aucune demande de la part de l'utilisateur de basculement dans le mode de stockage longue durée, l'organe de gestion peut automatiquement faire basculer le dispositif d'alimentation dans le mode de stockage longue durée (par exemple selon l'un des exemples précités ou une combinaison des deux).

Eventuellement, si l'utilisateur n'a pas laissé brancher les moyens de charge au dispositif d'alimentation, et qu'au cours d'un delta de temps donné, l'organe de gestion n'a enregistré aucune demande de la part de l'utilisateur de basculement dans le mode de stockage longue durée, l'organe de gestion peut automatiquement faire basculer le dispositif d'alimentation dans le mode de stockage longue durée (selon le mode dégradé dans lequel il ne peut que décharger le groupe de cellules pour l'amener à l'état de charge cible).

Dans les deux cas (chargeur branché ou non au dispositif au dispositif d'alimentation), le delta de temps de passage automatique en mode de stockage longue durée peut être fourni par le constructeur du dispositif d'alimentation ou de l'objet associé. Il peut également être prédéfini en fonction de la nature des cellules du groupe de cellules et de la manière dont on souhaite gérer le groupe de cellules (par exemple selon l'algorithme choisi pour décharger les cellules). Il peut être modifiable ou non par l'utilisateur (via par exemple l'interface homme-machine). Il peut être défini par l'utilisateur (via par exemple l'interface homme-machine) ou être défini et fixé en usine lors de la fabrication du dispositif d'alimentation ou de l'objet. Par exemple ce delta de temps est d'au moins deux semaines et de préférence d'au moins un mois. Ce delta de temps est par exemple de un mois.

La demande de retour au mode nominal pourra être requise directement par les moyens de gestion sans intervention de l'utilisateur (et ce que le dispositif comporte ou non une interface homme-machine et/ou soit en communication ou non avec une interface homme-machine) ou pourra être requise par l'utilisateur (implicitement ou explicitement).

Le dispositif d'alimentation pourra solliciter l'utilisateur lors d'une demande de passage au mode de stockage longue durée ou pourra ne pas solliciter l'utilisateur (et ce que le dispositif comporte ou non une interface homme-machine et/ou soit en communication ou non avec une interface homme-machine).

En place que l'interface homme-machine soit intégrée au dispositif d'alimentation comme ce qui a été indiqué, le dispositif d'alimentation pourra être configuré pour communiquer avec une interface homme-machine déportée du dispositif d'alimentation. L'interface homme-machine pourra être intégrée à l'objet associé au dispositif d'alimentation sans être pour autant intégrée au dispositif d'alimentation (par exemple l'interface homme-machine pourra être intégrée à un panneau de contrôle général de l'objet) ou pourra également être déportée de l'objet lui-même. L'interface homme-machine pourra ainsi être un ordinateur, un téléphone portable dit « intelligent » (plus connu sous le terme anglais de « smartphone ») ... Le dispositif d'alimentation pourra ainsi échanger avec l'utilisateur via une application présente sur le smartphone de l'utilisateur. Bien entendu, le dispositif d'alimentation pourra à la fois intégrer une interface homme-machine et à la fois être configuré pour communiquer avec une interface homme-machine déportée du dispositif d'alimentation. Bien entendu, l'objet pourra à la fois intégrer une interface homme-machine et à la fois être configuré pour communiquer avec une interface homme-machine déportée de l'objet. Pour communiquer avec une interface homme-machine déportée du dispositif d'alimentation et/ou de l'objet, le dispositif d'alimentation et/ou l'objet pourra comprendre une interface de communication avec l'extérieur (via une liaison filaire, une liaison Bluetooth (marque déposée), une liaison Wifi ...) .

Bien qu'ici, il ait toujours été question d'un état de charge cible, le dispositif d'alimentation pourra être configuré pour que le groupe de cellules atteigne une plage d'état de charge cible. Par exemple la plage pourra être centrée autour d'une valeur précitée (comme par exemple 25 ou 30 ou 35%). Par exemple la plage pourra être de plus ou moins 10% ou encore de plus ou moins 5% autour d'une des valeurs précitées. Par exemple la plage pourra être [35% ; 45%]. En conséquence, si le groupe de cellules présente un état de charge déjà compris dans la plage d'état de charge cible, le dispositif d'alimentation pourra être configuré pour ne pas décharger davantage le groupe de cellules ou pourra être configuré pour décharger davantage le groupe de cellules de manière que son état de charge soit centré ou davantage centré sur ladite plage d'état de charge cible.

Par ailleurs, bien qu'ici le dispositif d'alimentation autorise le chargement comme le déchargement des cellules lors du basculement dans le mode de stockage longue durée, dans un mode dégradé, le dispositif d'alimentation pourra seulement être configuré pour autoriser uniquement un déchargement des cellules lors du basculement dans le mode de stockage longue durée.

Une fois l'état de charge cible atteint, suite au chargement du groupe de cellules, l'utilisateur pourra être amené à débrancher les moyens de charge ou pourra être amené à les laisser en place.

Le dispositif d'alimentation pourra indiquer ou non à l'utilisateur dans quel stade se trouve le dispositif d'alimentation (en cours de chargement, en cours de déchargement, en cours de convergence vers l'état de charge cible, si l'état de charge cible est atteint ...). Cela pourra se faire par exemple via une interface homme-machine.

Bien qu'ici le stockage longue durée soit associé à une seule donnée, le stockage longue durée pourra être associé à au moins une deuxième donnée.

La deuxième donnée pourra être la valeur maximale de la période pour laquelle, si le dispositif d'alimentation 1 n'est pas utilisé durant cette période et se trouve dans le mode de stockage longue durée, il s'avère nécessaire de sortir dudit mode de stockage longue durée i.e. la deuxième donnée indiquera le laps de temps maximal au bout duquel il faudra sortir du mode de stockage longue durée (dans le but de recharger le groupe de cellules) soit en repassant en mode nominal soit en basculant dans un nouveau mode de stockage longue durée comme cela sera expliqué ci-dessous. En effet, comme les cellules ont tendance naturellement à s'auto-décharger, l'état de charge des cellules va avoir tendance à baisser lors du stockage longue durée. Si cet état de charge devient trop bas ceci pourrait entraîner des modifications irréversibles des caractéristiques des cellules. Il est donc préférable de s'assurer que l'on ne demeure pas trop longtemps dans le mode de stockage longue durée ou du moins que l'on ne demeure pas trop longtemps dans le mode de stockage longue durée sans recharger le groupe de cellules. La deuxième donnée pourra ainsi être une donnée prédéfinie (par exemple par le constructeur du groupe de cellules ou par le constructeur du dispositif d'alimentation ou par le constructeur de l'objet associé au dispositif d'alimentation) en fonction de la nature des cellules du groupe de cellules et de la manière dont on souhaite gérer le groupe de cellules (par exemple selon l'algorithme choisi pour décharger les cellules). Par exemple la deuxième donnée est fournie à l'utilisateur par exemple dans le mode d'emploi de l'objet associé au dispositif d'alimentation. La deuxième donnée sera par exemple de 10 mois et par exemple de 1 an et par exemple de 18 mois. Bien entendu, l'utilisateur pourra également décider seul de sortir du mode de stockage longue durée même s'il n'a pas atteint la deuxième donnée. Alternativement, la deuxième donnée pourrait ne pas être une valeur temporelle mais par exemple une valeur d'état de charge minimale (et par exemple la valeur du seuil critique).

Dans le cas du premier mode de réalisation, au vu de la deuxième donnée qui lui a été fournie, l'utilisateur demandera alors un retour au mode nominal non plus parce qu'il souhaitera utiliser de nouveau le dispositif d'alimentation en mode nominal mais parce qu'il souhaitera sortir du mode de stockage longue durée pour recharger le groupe de cellules et éviter leur endommagement. Néanmoins le retour au mode nominal se fera selon les mêmes étapes que ce qui a déjà été décrit pour le premier mode de réalisation (seule la raison change). Par ailleurs, une fois le groupe de batteries au moins partiellement rechargé (de préférence une fois le groupe de batteries ayant au moins atteint l'état de charge cible ou la plage d'état de charge cible), l'utilisateur pourra de nouveau demander le basculement en mode de stockage longue durée.

Dans le cas du deuxième mode de réalisation, de manière avantageuse, l'utilisateur n'aura pas besoin de s'intéresser à la deuxième donnée (qui peut éventuellement ne pas lui être fournie voire qui peut ne pas être prédéfinie) puisque l'état de charge du groupe de cellules au cours du mode de stockage longue durée sera surveillé par le dispositif d'alimentation lui-même.

Par ailleurs, bien qu'ici ce soit toujours un retour au mode nominal qui fasse sortir le dispositif d'alimentation de son mode de stockage longue durée, cela pourra se faire différemment. Ainsi cela pourra également être une nouvelle demande de stockage longue durée qui fasse sortir le dispositif d'alimentation de son premier mode de stockage longue durée. En effet, si l'utilisateur souhaite finalement remiser son dispositif d'alimentation plus longtemps que prévu et/ou si l'utilisateur a connaissance de la deuxième donnée précitée, il pourra demander une nouvelle fois de passer dans le mode de stockage longue durée (qui sera alors le deuxième mode de stockage longue durée) ce qui permettra avantageusement de recharger au moins en partie le groupe de cellules. On pourra ainsi s'appuyer sur l'un des exemples précités ou un mélange des deux pour ce nouveau deuxième mode de stockage longue durée. Dans tous les cas, si l'on souhaite recharger le groupe de cellules à la sortie d'un mode de stockage longue durée, ce rechargement pourra n'être que partiel notamment si l'on ne souhaite pas utiliser le dispositif d'alimentation dans le mode nominal mais repartir dans un nouveau mode de stockage longue durée.

La valeur du seuil critique peut être différente ou identique entre deux occurrences de chargement au cours d'un même mode de stockage longue durée ou entre deux passages différents en mode de stockage longue durée.

La valeur du seuil palier peut être différente ou identique entre deux occurrences de chargement au cours d'un même mode de stockage longue durée ou entre deux passages différents en mode de stockage longue durée.

La valeur de l'état de charge cible peut être différente ou identique entre deux occurrences de chargement au cours d'un même mode de stockage longue durée ou entre deux passages différents en mode de stockage longue durée.

Le stockage longue durée pourra être associé seulement à la deuxième donnée (la valeur maximale de la période pour laquelle, si le dispositif d'alimentation n'est pas utilisé durant cette période et se trouve dans le mode de stockage longue durée, il s'avère nécessaire de sortir dudit mode de stockage longue durée ) et non à la première donnée (la valeur minimale d'une période pour laquelle, si le dispositif d'alimentation n'est pas utilisé durant cette période, il s'avère préférable d'être en mode stockage longue durée et non en mode nominal).Les deux exemples de mise en oeuvre décrits pourront bien entendu être combinés entre eux.

Le groupe de cellules pourra ne comporter qu'une seule cellule, l'unité d'équilibrage passif ne remplissant alors que sa fonction d'amener si besoin le groupe de cellules à l'état de charge cible (et ne réalisant donc pas d'équilibrage). Le groupe de cellules pourra alternativement comporter au moins deux cellules de sorte que l'unité d'équilibrage passif remplisse alors que ses deux fonctions d'équilibrage de l'état de charge entre les différentes cellules et d'amener si besoin le groupe de cellules à l'état de charge cible.

L'unité d'équilibrage passif pourra être intégrée à l'organe de gestion.

Les moyens de mesures pourront être intégrés à l'organe de gestion ou à l'unité d'équilibrage passif.

L'unité d'équilibrage passif pourra arrêter seul le déchargement forcé des cellules pour que le groupe de cellules atteigne l'état de charge cible, sans intervention de l'organe de gestion.

## Revendications

1. Dispositif d'alimentation comprenant :
- un groupe d'au moins une cellule d'alimentation,
- des moyens de gestion du groupe de cellules comprenant une unité d'équilibrage passif desdites cellules,
le dispositif étant **caractérisé en ce que**, lors d'une demande de passage en mode stockage longue durée du dispositif, les moyens de gestion (3) sont configurés pour, via l'unité d'équilibrage passif (10), décharger le groupe de cellules jusqu'à ce que le groupe de cellules (2) atteigne un état de charge cible ou une plage d'état de charge cible, si un état de charge du groupe de cellules est supérieur à l'état de charge cible ou la plage d'état de charge cible.

2. Dispositif selon la revendication 1, dans lequel les moyens de gestion (3) comportent un Système de Contrôle des Batteries.

3. Dispositif selon la revendication 1 ou la revendication 2, comprenant une interface homme/machine (6) ou étant connecté à une interface homme/machine.

4. Dispositif selon la revendication 3, configuré pour recevoir la demande de passage en mode stockage longue durée via l'interface homme/machine (6).

5. Utilisation d'un dispositif selon l'une des revendications précédentes, pour l'alimentation d'un véhicule électrique.

6. Utilisation d'un dispositif selon la revendication 5, dans lequel le véhicule électrique est un vélo électrique.

7. Procédé de gestion d'un dispositif d'alimentation selon l'une des revendications précédentes, comprenant l'étape de, lors d'une demande de passage en mode stockage longue durée du dispositif et si un état de charge du groupe de cellules (2) est supérieur à l'état de charge cible ou la plage d'état de charge cible, décharger le groupe de cellules (2) jusqu'à ce que le groupe de cellules atteigne l'état de charge cible ou la plage d'état de charge cible.

8. Procédé selon la revendication 7, comprenant l'étape, dans le mode de stockage longue durée, de charger le groupe de cellules (2) si un état de charge dudit groupe de cellules (2) descend sous un seuil critique prédéterminé.

9. Programme d'ordinateur comprenant des instructions qui conduisent le dispositif selon l'une des revendications 1 à 4 à exécuter les étapes du procédé selon l'une des revendications 7 à 8.

10. Support de stockage lisible par ordinateur, sur lequel est enregistré le programme d'ordinateur selon la revendication 9.

## Patentansprüche

1. Stromversorgungsvorrichtung umfassend:
- eine Gruppe aus zumindest einer Stromversorgungszelle,
- Verwaltungsmittel der Zellengruppe, umfassend eine passive Ausgleichseinheit der betreffenden Zellen,
**dadurch gekennzeichnet, dass** bei einer Anforderung zum Wechseln in den Langzeit-Speichermodus der Vorrichtung die Verwaltungsmittel (3) dafür ausgelegt sind, die Zellengruppe über die passive Ausgleichseinheit (10) so weit zu entladen, bis die Zellengruppe (2) einen Ziel-Ladezustand oder einen Ziel-Ladezustandsbereich erreicht, wenn ein Ladezustand der Zellengruppe höher als der Ziel-Ladezustand oder der Ziel-Ladezustandsbereich ist.

2. Vorrichtung nach Anspruch 1, bei welcher die Verwaltungsmittel (3) ein Batteriekontrollsystem enthalten.

3. Vorrichtung nach Anspruch 1 oder Anspruch 2, welche eine Mensch/Maschinenschnittstelle (6) umfasst oder mit einer Mensch/Maschinenschnittstelle verbunden ist.

4. Vorrichtung nach Anspruch 3, die dafür ausgelegt ist, die Anforderung zum Wechsel in den Langzeit-Speichermodus über die Mensch/Maschinenschnittstelle (6) zu empfangen.

5. Verwendung einer Vorrichtung nach einem der vorhergehenden Ansprüche zur Stromversorgung eines Elektrofahrzeugs.

6. Verwendung einer Vorrichtung nach Anspruch 5, bei welcher das Elektrofahrzeug ein Elektrofahrrad ist.

7. Verfahren zur Verwaltung einer Stromversorgungsvorrichtung nach einem der vorhergehenden Ansprüche, welches den Schritt umfasst, dass, wenn eine Anforderung zum Wechsel in den Langzeit-Speichermodus der Vorrichtung erfolgt und wenn dabei ein Ladezustand der Zellengruppe (2) höher als der Ziel-Ladezustand oder der Ziel-Ladezustandsbereich ist, die Zellengruppe (2) so weit entladen wird, bis die Zellengruppe den Ziel-Ladezustand oder den Ziel-Ladezustandsbereich erreicht.

8. Verfahren nach Anspruch 7, welches den Schritt umfasst, dass die im Langzeit-Speichermodus befindliche Zellengruppe (2) aufgeladen wird, wenn ein Ladezustand dieser Zellengruppe (2) unter einen vorbestimmten kritischen Schwellenwert absinkt.

9. Computerprogramm, das Befehle umfasst, welche die Vorrichtung nach einem der Ansprüche 1 bis 4 dazu veranlassen, die Schritte des Verfahrens nach einem der Ansprüche 7 bis 8 auszuführen.

10. Computerlesbares Speichermedium, auf welchem das Computerprogramm nach Anspruch 9 abgespeichert ist.

## Claims

1. Power supply device comprising:
a group of at least one power supply cell,
means for managing the cell group comprising a passive balancing unit of said cells,
the device being **characterised in that**, during a request to move into long-duration storage mode of the device, the management means (3) are configured to, via the passive balancing unit (10), discharge the cell group until the cell group (2) reaches a target charge state or a target charge state range, if a charge state of the cell group is greater than the target charge state or the target charge state range.

2. Device according to claim 1, wherein the management means (3) comprise a Battery Management System.

3. Device according to claim 1 or claim 2, comprising a man-machine interface (6) or being connected to a man-machine interface.

4. Device according to claim 3, configured to receive the request to move into long-duration storage mode via the man-machine interface (6).

5. Use of a device according to one of the preceding claims, for supply power to an electric vehicle.

6. Use of a device according to claim 5, wherein the electric vehicle is an electric bike.

7. Method for managing a power supply device according to one of the preceding claims, comprising the step of, during a request to move into long-duration storage mode of the device, and if a charge state of the cell group (2) is greater than the target charge state or the target charge state range, discharging the cell group (2) until the cell group reaches the target charge state or the target charge state range.

8. Method according to claim 7, comprising the step, in the long-duration storage mode, of charging the cell group (2) if a charge state of said cell group (2) falls under a predetermined critical threshold.

9. Computer program comprising instructions which cause the device according to one of claims 1 to 4 to execute the steps of the method according to one of claims 7 to 8.

10. Storage medium which can be read by a computer, on which the computer program according to claim 9 is recorded.
